# EUROPÄISCHE PATENTANMELDUNG

(11) **EP 1 139 643 A1**
(43) Veröffentlichungstag der Anmeldung: **04.10.2001**
(21) Anmeldenummer: 01103431.1
(22) Anmeldetag: 14.02.2001
(51) Int. Cl.: H04M 3/54, H04M 3/42

(54) **Verfahren zur Anrufweiterleitung in einem Kommunikationsnetz**

(30) Priorität: 31.03.2000 DE 10016248
(71) Anmelder: SIEMENS AKTIENGESELLSCHAFT, 80333 München (DE)
(72) Erfinder: Catley, Ian, 82178 Puchheim (DE); Gartner, Martin, 82024 Taufkirchen (DE); Honold, Stefan, 81476 Muenchen (DE); Von Ow, Hans-Peter, Dr., 81379 Muenchen (DE)

(57) **Zusammenfassung**

Die Erfindung betrifft ein Verfahren zur Anrufweiterleitung in einem Kommunikationsnetz, bei dem ein einziger erster Teilnehmeranschluß (C1T1, C2T1) und mindestens ein für eine vom ersten Teilnehmeranschluß ausgehende Rufumschaltung vorgesehener zweiter Teilnehmeranschluß (S1T2, S1T3, S2T2, S2T3) zu einer Anrufübernahmegruppe (AUN1, AUN2) zugeordnet sind. Ein an den ersten Teilnehmeranschluß gerichteter Anruf wird innerhalb der Anrufübernahmegruppe an den zweiten Teilnehmeranschluß für eine Anrufübernahme weitergeleitet und/oder dort signalisiert.

## Beschreibung

Durch ein Einrichten von integrierten Vorzimmeranlagen werden in einer Nebenstellenanlage Teamfunktionen verfügbar gemacht. Beim Einrichten einer integrierten Vorzimmeranlage werden ausgewählte Teilnehmeranschlüsse zu einer Vorzimmergruppe zusammengefasst, die Rolle der Teilnehmeranschlüsse definiert und die Beziehungen zwischen den einzelnen Teilnehmeranschlüssen innerhalb der Vorzimmergruppe festgelegt. Die definierbaren Rollen sind Chef, Sekretär und Vertretungssekretär. Die Festlegung der Beziehungen der Teilnehmeranschlüsse innerhalb einer Vorzimmergruppe erfolgt durch eine Zuordnung eines Chefteilnehmeranschlusses zu einem Sekretärteilnehmeranschluss oder eines Sekretärteilnehmeranschlusses zu einem Vertretungssekretärteilnehmeranschluss.

Im Kommunikationssystem Hicom der Firma Siemens steht eine anlageninterne Chef- und Sekretär zur Verfügung mit maximal vier Cheffernsprechern und maximal zwei Sekretärfernsprechern je Vorzimmeranlage (Hicom 300E V 2.0, Beschreibung der Leistungsmerkmale, Kap. 4.30 und Kap. 6.3.1, 23.04.1999, Siemens Sachnummer: P31003-G1036-L100-3-18). Ein an einen Cheffernsprecher gerichteter Anruf wird in einem Standardbetriebsmodus an einen Erstsekretärfernsprecher vermittelt und am Cheffernsprecher sowie gegebenenfalls an einem weiteren Sekretärfernsprecher signalisiert. Der Anruf kann sowohl vom Cheffernsprecher als auch von dem weiteren Sekretärfernsprechern aus übernommen werden. Nach einer Rufumschaltung zum Cheffernsprecher wird in einem weiteren Betriebsmodus ein an den Cheffernsprecher gerichteter Anruf direkt zu diesem vermittelt und gegebenenfalls an den Sekretärfernsprechern signalisiert. Der jeweilige Betriebsmodus sowie die jeweilige Rufumschaltung wird am Cheffernsprecher und an den zugeordneten Sektretäfernsprechern signalisiert. Die Teamfunktion für eine Vorzimmeranlage stehen bislang nur innerhalb einer Nebenstellenanlage zur Verfügung.

Der vorliegenden Erfindung liegt die Aufgabe zugrunde, ein Verfahren zur kommunikationsanlagenübergreifenden Bereitstellung von Teamfunktionen anzugeben.

Diese Aufgabe wird erfindungsgemäß durch ein Verfahren mit den in Anspruch 1 angegebenen Merkmalen gelöst.

Vorteilhafte Weiterbildungen des erfindungsgemäßen Verfahrens sind den Ansprüchen 2 bis 6 zu entnehmen.

Ein wesentlicher Aspekt des erfindungsgemäßen Verfahrens besteht darin, daß zur kommunikationsanlagenübergreifenden Bereitstellung von Teamfunktionen in Kommunikationsnetzen, in denen das Leistungsmerkmal einer netzweiten Anrufübernahmegruppe zur Verfügung steht, keinerlei Hardwareänderungen notwendig sind. Bei einer netzweiten Anrufübernahmegruppe wird ein an einen Teilnehmeranschluß der Anrufübernahmegruppe gerichteter Anruf an weiteren zur Anrufübernahmegruppe zugeordneten Teilnehmeranschlüssen für eine Anrufübernahme parallel signalisiert. Das erfindungsgemäße Verfahren weist darüber hinaus den Vorteil auf, daß die Beschränkungen bezüglich der maximalen Anzahl von Chefteilnehmeranschlüssen und von Sekretäteilnehmeranschlüssen je Vorzimmeranlage aufgehoben sind. Dies gilt insbesondere für kommunikationsanlagenübergreifend eingerichtete integrierte Vorzimmeranlagen.

Die Erfindung wird nachfolgend an einem Ausführungsbeispiel anhand der Zeichung näher erläutert.

Es zeigt:

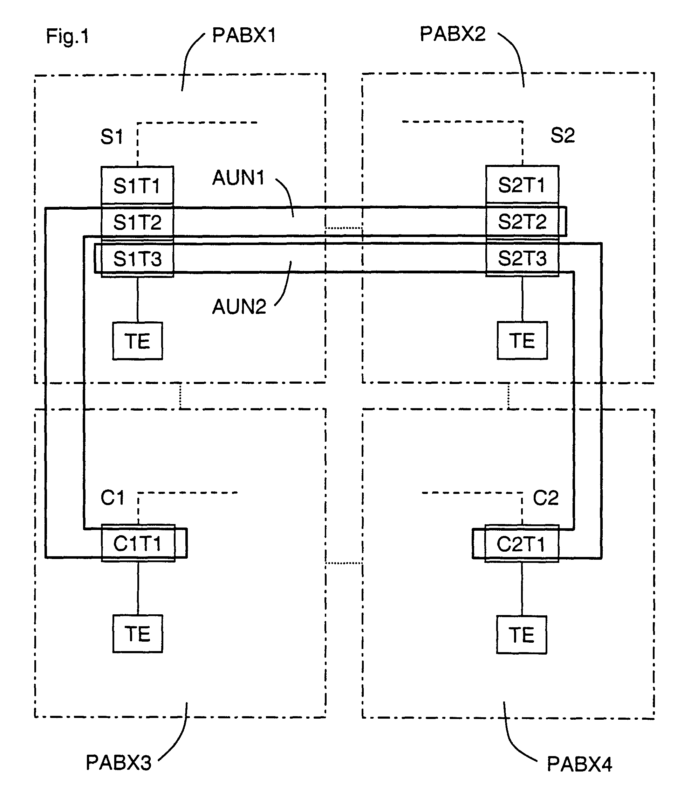

- Figur 1: ein Kommunikationsnetz mit mehreren Kommunikationsanlagen und mehreren in Beziehung zueinander stehenden ersten und zweiten Teilnehmeranschlüssen.

In Figur 1 ist ein Kommunikationsnetz mit vier Nebenstellenanlagen PABX1 bis PABX4, zwei ersten Teilnehmeranschlüssen C1T1 und C2T1 und mehreren zweiten Teilnehmeranschlüssen S1T1 bis S2T3 dargestellt. Die ersten Teilnehmeranschlüsse C1T1 und C2T1 werden an Chefarbeitsplätzen C1 und C2 verfügbar gemacht. Den ersten Teilnehmeranschlüssen ist jeweils ein Teilnehmerendgerät TE zugeordnet, an denen jeweils eine Benutzerschnittstelle zur Nutzung von Teamfunktionen zur Verfügung steht. Die zweiten Teilnehmeranschlüsse S1T1 bis S2T3 sind zwei Sekretärarbeitsplätzen S1 und S2 zugeordnet. Den zweiten Teilnehmeranschlüssen S1T1 bis S1T3, S2T1 bis S2T3 ist an einem Sekretärarbeitsplatz S1, S2 ein gemeinsames, teamfunktionenunterstützendes Teilnehmerendgerät TE zugeordnet. Die zweiten Teilnehmeranschlüsse S1T1 und S2T1 sind für die Sekretärarbeitsplätze S1 und S2 jeweils als Hauptteilnehmeranschlüsse eingerichtet. Die zweiten Teilnehmeranschlüsse S1T2, S1T3, S2T2 und S2T3 sind im vorliegenden Beispiel als virtuelle Teilnehmeranschlüsse eingerichtet, die für eine vom jeweiligen Chefarbeitsplatz C1 und C2 ausgehende Rufumschaltung vorgesehen sind.

Im vorliegenden Fall sind die Sekretärarbeitsplätze S1 und S2 und die Chefarbeitsplätze C1 und C2 auf die vier Nebenstellenanlagen PABX1 bis PABX4 verteilt. Für jeden ersten Teilnehmeranschluss C1T1 und C2T1 ist jeweils eine Anrufübernahmegruppe AUN1 und AUN2 eingerichtet. Im betrachteten Beispiel ist für den Chefarbeitsplatz C1 und die Sekretärarbeitsplätze S1 und S2 eine Chef-Sekretär-Zuordnung eingerichtet ebenso wie für den Chefarbeitsplatz C2 und die Sekretärarbeitsplätze S1 und S2. Daher werden der erste Teilnehmeranschluß C1T1 sowie die zweiten Teilnehmeranschlüsse S1T2 und S2T2 einer Anrufübernahmegruppe AUN1 und der erste Teilnehmeranschluss C2T1 sowie die zweiten Teilnehmeranschlüsse S1T3 und S2T3 der Anrufübernahmegruppe AUN2 zugeordnet.

Ist beispielsweise in einem ersten Betriebsmodus eine Rufumleitung von dem ersten Teilnehmeranschluß C1T1 auf den zweiten Teilnehmeranschluß S1T2 eingerichtet, so wird ein an den ersten Teilnehmeranschluß C1T1 gerichteter Anruf innerhalb der Anrufübernahmegruppe AUN1 an den ausgewählten zweiten Teilnehmeranschluß S1T2 vermittelt und an dem ersten Teilnehmeranschluß C1T1 sowie an dem weiteren zweiten Teilnehmeranschluß S2T2 für eine Anrufübernahme parallel signalisiert. In einem zweiten Betriebsmodus erfolgt keine Rufumleitung von dem ersten Teilnehmeranschluß C1T1 auf den zweiten Teilnehmeranschluß S1T2, sondern ein an den Teilnehmeranschluß C1T1 gerichteter Anruf wird direkt an diesen Teilnehmeranschluß vermittelt und innerhalb der Anrufübernahmegruppe AUN1 an den zweiten Teilnehmeranschlüssen S1T2 und S2T2 für eine Anrufübernahme parallel signalisiert. In entsprechender Weise läßt sich die Anrufübernahmegruppe AUN2 für eine Rufumleitung vom ersten Teilnehmeranschluß C2T1 auf einen der beiden zweiten Teilnehmeranschlüsse S1T3 oder S2T3 einrichten. Innerhalb der Anrufübernahmegruppe AUN2 können Anrufe in analoger Weise umgeleitet oder parallel signalisiert werden. Der Vorteil der beschriebenen Einrichtung von Anrufübernahmegruppen ist darin zu sehen, daß durch einen an einen ersten Teilnehmeranschluß gerichteten Anruf kein Teilnehmer an einem weiteren ersten Teilnehmeranschluß gestört wird.

Ein an den ersten Teilnehmeranschluß C1T1 oder C2T1 gerichteter Anruf wird im ersten Betriebsmodus nach Eingabe einer Benutzerinformation an einem zweiten Teilnehmeranschluß S1T2, S1T3, S2T2 oder S2T3 übernommen, an dem der an den ersten Teilnehmeranschluß C1T1 oder C2T1 gerichtete Anschluß signalisiert wurde. Ein an den zweiten Teilnehmeranschluß S1T2, S1T3, S2T2 oder S2T3 umgeleiteter Anruf wird im zweiten Betriebsmodus nach Eingabe einer Benutzerinformation an dem zugehörigen ersten Teilnehmeranschluß C1T1 oder C2T1 übernommen. Vorteilhafterweise wird ein an den ersten Teilnehmeranschluß C1T1 oder C2T1 gerichteter Anruf zu dem zweiten Teilnehmeranschluß S1T2, S1T3, S2T2 oder S2T3 umgeleitet an dem zuerst eine entsprechende Benutzerinformation eingegeben wird.

Vorteilhafterweise wird auch der jeweilige Betriebsmodus an den ersten Teilnehmeranschlüssen C1T1, C2T1 und den zweiten Teilnehmeranschlüssen S1T2, S1T3, S2T2, S2T3 signalisiert.

## Patentansprüche

1. Verfahren zur Anrufweiterleitung in einem Kommunikationsnetz, wobei
- ein an einen ersten Teilnehmeranschluß (C1T1, C2T1) gerichteter Anruf in einem ersten Betriebsmodus an diesen Teilnehmeranschluß vermittelt wird und an mindestens einem ausgewählten zweiten Teilnehmeranschluß (S1T2, S1T3, S2T2, S2T3) für eine Anrufübernahme signalisiert wird,
- ein an einen ersten Teilnehmeranschluß (C1T1, C2T1) gerichteter Anruf in einem zweiten Betriebsmodus an einen ausgewählten zweiten Teilnehmeranschluß (S1T2, S1T3, S2T2, S2T3)vermittelt wird und an dem ersten Teilnehmeranschluß und/oder mindestens einem weiteren zweiten Teilnehmeranschluß signalisiert wird,
**dadurch gekennzeichnet,**
**daß** ein einziger erster Teilnehmeranschluß (C1T1, C2T1) und mindestens ein für eine vom ersten Teilnehmeranschluß ausgehende Rufumschaltung vorgesehener zweiter Teilnehmeranschluß (S1T2, S1T3, S2T2, S2T3) zu einer Anrufübernahmegruppe (AUN1, AUN2) zugeordnet sind, und daß ein an den ersten Teilnehmeranschluß gerichteter Anruf innerhalb der Anrufübernahmegruppe an den zweiten Teilnehmeranschluß weitergeleitet und/oder dort signalisiert wird.

2. Verfahren nach Anspruch 1,
**dadurch gekennzeichnet,**
**daß** für jeden ersten Teilnehmeranschluß (C1T1, C2T1) eine Anrufübernahmegruppe (AUN1, AUN2) eingerichtet ist.

3. Verfahren nach einem der Ansprüche 1 oder 2,
**dadurch gekennzeichnet,**
**daß** ein an einen ersten Teilnehmeranschluß (C1T1, C2T1) gerichteter Anruf innerhalb einer kommunikationsanlagenübergreifend konfigurierbaren Anrufübernahmegruppe (AUN1, AUN2) weitergeleitet und/oder signalisiert wird.

4. Verfahren nach einem der Ansprüche 1 bis 3,
**dadurch gekennzeichnet,**
**daß** der jeweilige Betriebsmodus an dem ersten Teilnehmeranschluß (C1T1, C2T1) und/oder dem zweiten Teilnehmeranschluß (S1T2, S1T3, S2T2, S2T3) signalisiert wird.

5. Verfahren nach einem der Ansprüche 1 bis 4,
**dadurch gekennzeichnet,**
**daß** ein an einen ersten Teilnehmeranschluß (C1T1, C2T1) gerichteter Anruf im ersten Betriebsmodus nach Eingabe einer Benutzerinformation an einem zweiten Teilnehmeranschluß (S1T2, S1T3, S2T2, S2T3) übernommen wird, an dem der an den ersten Teilnehmeranschluß gerichtete Anruf signalisiert wurde, und daß ein an einen zweiten Teilnehmeranschluß (S1T2, S1T3, S2T2, S2T3) umgeleiteter Anruf im zweiten Betriebsmodus nach Eingabe einer Benutzerinformation an einem zugehörigen ersten Teilnehmeranschluß (C1T1, C2T1) übernommen wird.

6. Verfahren nach einem der Ansprüche 1 bis 5,
**dadurch gekennzeichnet,**
**daß** der an einen ersten Teilnehmeranschluß (C1T1, C2T1) gerichtete Anruf zu dem zweiten Teilnehmeranschluß (S1T2, S1T3, S2T2, S2T3) umgeleitet wird, an dem zuerst eine entsprechende Benutzerinformation eingegeben wird.
